# EUROPÄISCHE PATENTSCHRIFT

(11) **EP 1 103 446 B1**
(45) Veröffentlichungstag und Bekanntmachung des Hinweises auf die Patenterteilung: **21.09.2005**
(21) Anmeldenummer: 00115074.7
(22) Anmeldetag: 27.07.2000
(51) Int. Cl.: B62D 15/02

(54) **Lenkwinkelsensor für ein Fahrzeug**
Steering angle sensor for a vehicle
Capteur d'angle de braquage

(30) Priorität: 26.11.1999 DE 19956902
(43) Veröffentlichungstag der Anmeldung: 30.05.2001
(73) Patentinhaber: Valeo Schalter und Sensoren GmbH, 74321 Bietigheim-Bissingen (DE)
(72) Erfinder: Veigel, Thomas, 74372 Sersheim (DE); Kofink, Peter, 74379 Ingersheim (DE)
(74) Vertreter: Dreiss, Fuhlendorf, Steimle & Becker

(56) Entgegenhaltungen:
- EP-A- 0 381 963
- EP-A- 0 902 255
- DE-A- 4 009 007
- DE-A- 19 635 159

## Beschreibung

Die Erfindung geht aus von einem Lenkwinkelsensor für ein Fahrzeug mit einer drehbar gelagerten Codescheibe, deren Drehwinkel dem Drehwinkel des Lenkrades entspricht, mit mindestens einem Detektor, dessen Eingang die mit der Codescheibe modulierte Größe zugeführt wird und dessen Ausgang dem Eingang einer Auswerteeinheit zugeführt wird, welche den Absolutwert des Lenkwinkels bestimmt und mit einer mit der Codescheibe korrespondierenden Zähleinrichtung, deren der Auswerteeinheit zugeführtes Zählsignal von der Anzahl der von der Codescheibe gegenüber einer Mittelstellung zurückgelegten vollen Umdrehungen abhängig ist.

Solche Lenkwinkelsensoren sind beispielsweise aus der DE 196 01 965 A1 bekannt geworden. Bei solchen Lenkwinkelsensoren werden die vollen Umdrehungen der Codescheibe mittels einer mechanischen Zähleinrichtung gezählt. Die Zähleinrichtung weist dabei ein mechanisches Getriebe auf, welches von einem schrittweise schaltbaren Drehschalter nach jeder Umdrehung der Codescheibe in von der Umdrehungsrichtung der Codescheibe abhängigen Schaltrichtung um einen Schritt weitergeschaltet wird. Zur mechanischen Schaltung des Drehschalters weist die Codescheibe zwei nebeneinander liegende Schaltnocken auf, die den Drehschalter passieren und ihn um einen Schritt weiterschalten. Nachteil eines solchen Standes der Technik ist, dass aufgrund des mechanischen Kontakts der Codescheibe bzw. der auf der Codescheibe angeordneten Schaltnocken mit dem Drehschalter eine Geräuschentwicklung beim Weiterschalten des Drehschalters verursacht wird. Aufgrund des mechanischen Kontakts weisen die Lenkwinkelsensoren außerdem einen Verschleiß auf, der die Lebensdauer der Lenkwinkelsensoren begrenzt.

Aus der DE 40 09 007 A1 ist ein Verfahren zum Erfassen des absoluten Lenkwinkels eines Lenkwinkelsensors bekannt geworden, der einen Fotounterbrecher aufweist, welcher eine auf einer Scheibe angeordnete Neutralpositionsmarkierung detektiert.

Aus der EP 0 902 255 A2 ist ein Winkelsensor bekannt geworden, der ein Sensorelement einen an einem Codering angeordneten Magneten zur Normierung des Winkelsensors bei der ersten Inbetriebnahme umfasst.

Der vorliegenden Erfindung liegt die Aufgabe zugrunde, einen eingangs beschriebenen Lenkwinkelsensor weiterzubilden, bei dem den vorstehend geschilderten Nachteilen des Standes der Technik abgeholfen ist.

Insbesondere soll mit der Zähleinheit auch noch eine Drehrichtung der Codescheibe bestimmt werden können.

Diese Aufgabe wird bei einem Lenkwinkelsensor mit den Merkmalen des Anspruchs 1 gelöst.

Der erfindungsgemäße Lenkwinkelsensor hat dabei den wesentlichen Vorteil, dass Geräuschentwicklungen durch die die vollen Umdrehungen der Codescheibe zählende Zähleinrichtung nicht auftreten können. Aufgrund der berührungslosen Bestimmung der vollen Umdrehungen der Codescheibe kann auch kein Verschleiß der Bauteile zwischen der Zähleinrichtung und den an der Codescheibe zur Zählung vorgesehenen stattfinden.

Die Schaltpunkte der analogen Ausgangswerte der Sensoren sind in der nachgeschalteten, oder auch integrierten Auswerteeinheit festlegbar. Dies hat den Vorteil, dass durch Veränderung der Schwellwerte ein Toleranzausgleich stattfinden kann, wodurch Toleranzen der Bauteile der Lenkwinkelsensoren ausgeglichen werden können. Hieraus resultieren nicht nur ein einfacher Aufbau sondern auch geringe Kosten des Lenkwinkelsensors.

Die Erfindung sieht ferner vor, dass die Zähleinrichtung zwei ortsfest angeordnete Magnetfeldsensoren aufweist und dass an der Codescheibe wenigstens ein Magnetelement vorhanden ist, wobei die Magnetfeldsensoren mit dem Magnetelement berührungslos korrespondiert und bei Ein-bzw. Austritt des Magnetelements in den bzw. aus dem Detektionsbereich des Magnetfeldsensors jeweils ein Zählsignal an die Auswerteeinheit abgeben. Gerade durch die Verwendung von Magnetfeldsensoren mit einem damit korrespondierenden Magnetelement kann eine berührungslose Zählung der vollen Umdrehungen der Codescheibe erfolgen.

Durch das Vorsehen von zwei Magnetfeldsensoren kann die Störanfälligkeit des Lenkwinkelsensors verringert werden und zudem ist es mit der Auswerteeinheit möglich, die Drehrichtung der Codescheibe zu bestimmen. Bei der Verwendung von zwei Magnetfeldsensoren kann die Auswertung der beiden Magnetfeldsensoren zeitlich nacheinander oder gleichzeitig erfolgen.

Vorteilhafterweise kann bei einer Ausgestaltung der Erfindung vorgesehen sein, dass das wenigstens eine Magnetelement am Umfang der Codescheibe angeordnet ist. Dies ist deshalb von Vorteil, weil der Umfang der Codescheibe bei einer Drehbewegung der Codescheibe den größten Weg zurücklegt. Die Zähleinrichtung gewinnt damit an Präzision.

Bei einer Weiterbildung der Erfindung ist das wenigstens eine Magnetelement ein Dauermagnet. Dies hat den Vorteil, dass kein Leiterelement bzw. keine Stromversorgung des Magnetelements auf der Codescheibe benötigt wird.

Bei einer vorteilhaften Variante der Erfindung sind die Magnetfeldsensoren Reedkontakte. Reedkontakte eignen sich deshalb besonders gut, weil sie als nominierte Bauteile beziehbar und sehr kostengünstig sind. Dabei ist auch denkbar, dass anstelle von Reedkontakten gepulste Hallelemente Verwendung finden. Derartige Elemente besitzen eine sehr niedrige Stromaufnahme.

Die beiden Magnetfeldsensoren sind dabei vorteilhafterweise auf einer Kreisbahn um die Drehachse der Codescheibe angeordnet, und zwar so, dass das Magnetelement bei sich drehender Codescheibe den Detektionsbereich der beiden Magnetfeldsensoren nacheinander durchläuft.

Bei einer Variante der Erfindung triggert das Zählsignal die Auswerteeinheit. Durch eine solche Triggerung kann das Zählsignal eindeutig abgebildet und günstig weiterverarbeitet werden.

Bei einer weiteren Ausführungsform der Erfindung ist vorgesehen, dass das Zählsignal einem in der Auswerteeinheit vorhandenen Up-Down-Zähler zugeführt wird und dass ein Mikroprozessor vorhanden ist, der den Up-Down-Zähler initialisiert und ausliest. Insbesondere durch Verwendung eines solchen Up-Down-Zählers ist eine Zählung der vollen Lenkradumdrehungen auf einfache Art und Weise möglich.

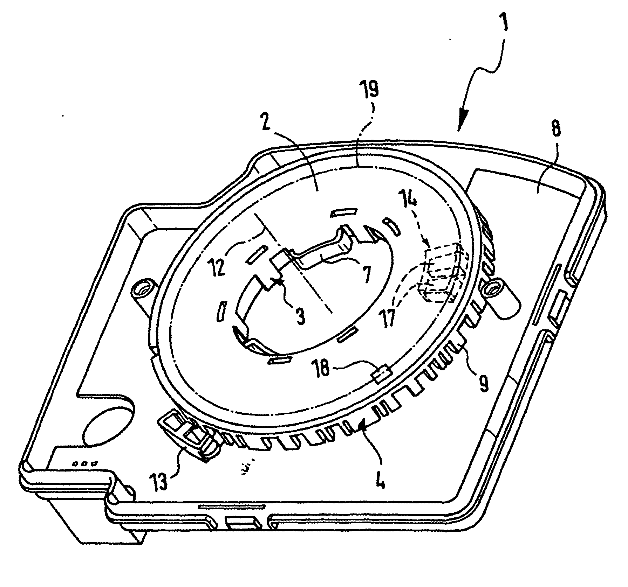

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Figur ist ein Ausschnitt eines Lenkwinkelsensors 1 für ein Fahrzeug mit einer drehbar gelagerten Codescheibe 2, deren Drehwinkel dem Drehwinkel des in der Figur nicht dargestellten Lenkrades entspricht, dargestellt. Die Codescheibe 2 weist eine innere Ringwand 3 sowie eine äußere Ringwand 4 auf. Dabei sind an der inneren Ringwand 3 Transportösen 7 angeformt, über die die Codescheibe 2 von dem Lenkrad indirekt angetrieben wird, so dass sich der Drehwinkel der Codescheibe 2 mit dem Drehwinkel des nicht dargestellten Lenkrades ändert. Die Codescheibe 2 ist in einem ortsfest angeordneten Gehäuse 8 drehbar gelagert. Zur Bestimmung des Absolutwerts des Drehwinkels unabhängig von den vorausgegangenen Umdrehungen des Lenkrads dient eine Codierung 9 an der äußeren Ringwand 4 in Form von sich parallel zur Drehachse 12 der Codescheibe 2 erstreckenden rechteckförmigen Zähnen, welche von einem Detektor 13 abgetastet werden. Auf diese Weise ist es möglich, die Winkelstellung der Codescheibe 2 innerhalb einer 360°-Umdrehung als Absolutwert zu bestimmen.

Zur Bestimmung der Anzahl der von der Codescheibe 2 gegenüber einer Mittelstellung zurückgelegten vollen Umdrehungen ist eine Zähleinrichtung 14 vorgesehen. Die Zähleinrichtung 14 ist dabei ortsfest mit dem Gehäuse 8 verbunden und weist einen gewissen Abstand zu der drehbar gelagerten Codescheibe 2 auf. Außerdem weist die Zähleinrichtung 14 zwei Magnetfeldsensoren 17, nämlich zwei Reedkontakte, auf, die mit einem gewissen Abstand zueinander oberhalb einer Kreisbahn der Codescheibe 2 angeordnet sind.

Auf der Codescheibe 2 ist ein Magnetelement 18, nämlich ein in die Codescheibe 2 eingelassener Dauermagnet, angeordnet. Wie aus der Figur deutlich zu erkennen ist, ist das Magnetelement 18 am Umfang der Codescheibe 2 plaziert. Bei sich drehender Codescheibe 2 bewegt sich das Magnetelement 18 entlang einer Kreisbahn 19 um die Drehachse 12. Dabei passiert es die beiden entlang dieser Kreisbahn 12 angeordneten Magnetfeldsensoren 17. Bei Eintritt des Magnetelements 18 in den jeweiligen Detektionsbereich des jeweiligen Magnetfeldsensors 17 wird ein Zählsignal erzeugt, welches an eine in der Figur nicht dargestellte Auswerteeinheit abgegeben wird. Aufgrund eines in der Auswerteeinheit vorhandenen Up-Down-Zählers kann die Anzahl der von der Codescheibe 2 gegenüber der Mittelstellung zurückgelegten vollen Umdrehungen ermittelt werden.

Vorteil eines solchen erfindungsgemäßen Lenkwinkelsensors ist, dass die Zähleinrichtung 14 mit der Codescheibe berührungslos, nämlich über die Magnetfeldsensoren 17 und das Magnetelement 18, korrespondiert und dass dadurch eine Zählung der vollen Umdrehungen der Codescheibe 2 ohne eine mechanische, geräusch- und verschleißbehaftete Kontaktierung der Codescheibe 2 möglich ist.

## Patentansprüche

1. Lenkwinkelsensor (1) für ein Fahrzeug mit einer drehbar gelagerten Codescheibe (2), deren Drehwinkel dem Drehwinkel des Lenkrades entspricht, mit mindestens einem Detektor (13), dessen Eingang die mit der Codescheibe (2) modulierte Größe zugeführt wird und dessen Ausgang dem Eingang einer Auswerteeinheit zugeführt wird, welche den Absolutwert des Lenkwinkels bestimmt, und mit einer mit der Codescheibe (2) korrespondierenden Zähleinrichtung (14), deren der Auswerteeinheit zugeführten Zählsignale von der Anzahl der von der Codescheibe (2) gegenüber einer Mittelstellung zurückgelegten vollen Umdrehungen abhängig sind, **dadurch gekennzeichnet, dass** die Zähleinrichtung (14) zwei ortsfest nebeneinander angeordnete Magnetfeldsensoren (17) aufweist und dass an der Codescheibe (2) wenigstens ein Magnetelement (18) vorhanden ist, wobei die Magnetfeldsensoren (17) mit dem Magnetelement (18) berührungslos korrespondieren und bei Ein- bzw. Austritt des Magnetelements (18) in den bzw. aus dem Detektionsbereich des jeweiligen Magnetfeldsensors (17) ein Zählsignal an die Auswerteeinheit zur Bestimmung der Drehrichtung der Codescheibe abgeben.

2. Lenkwinkelsensor (1) nach Anspruch 1, **dadurch gekennzeichnet, dass** das wenigstens eine Magnetelement (18) am Umfang der Codescheibe (2) angeordnet ist.

3. Lenkwinkelsensor (1) nach Anspruch 1 oder 2, **dadurch gekennzeichnet, dass** das wenigstens eine Magnetelement (18) ein Dauermagnet ist.

4. Lenkwinkelsensor (1) nach einem der Ansprüche 1 bis 3, **dadurch gekennzeichnet, dass** die Magnetfeldsensoren (17) Reedkontakte sind.

5. Lenkwinkelsensor (1) nach einem der vorhergehenden Ansprüche, **dadurch gekennzeichnet, dass** das Zählsignal die Auswerteeinheit triggert.

6. Lenkwinkelsensor (1) nach einem der vorhergehenden Ansprüche, **dadurch gekennzeichnet, dass** das Zählsignal einem in der Auswerteeinheit vorhandenen Up-Down-Zähler zugeführt wird und dass ein Mikroprozessor vorhanden ist, der den Up-Down-Zähler initialisiert und ausliest.

## Claims

1. Steering angle sensor (1) for a vehicle, having a rotatably mounted encoder disk (2), whose rotation angle corresponds to the turning angle of the steering wheel, having at least one detector (13), to whose input the variable modulated by the encoder disk (2) is fed and whose output is fed to the input of an evaluation unit which determines the absolute value of the steering angle, and having a counting apparatus (14) corresponding with the encoder disk (2), whose counting signals fed to the evaluation unit are dependent upon the number of full rotations performed by the encoder disk (2) relative to a middle position, **characterised in that** the counting apparatus (14) has two magnetic field sensors (17) arranged locally fixed adjoining each other and that at least one magnetic element (18) is present on the encoder disk (2), whereby the magnetic field sensors (17) correspond with the magnetic element (18) without contact and on entry or exit of the magnetic element (18) into or out of the detection range of the respective magnetic field sensor (17), a counting signal is sent to the evaluation unit in order to determine the rotation direction of the encoder disk.

2. Steering angle sensor (1) according to claim 1, **characterised in that** the at least one magnetic element (18) is arranged on the periphery of the encoder disk (2).

3. Steering angle sensor (1) according to claim 1 or 2, **characterised in that** the at least one magnetic element (18) is a permanent magnet.

4. Steering angle sensor (1) according to one of the claims 1 to 3, **characterised in that** the magnetic field sensors (17) are reed contacts.

5. Steering angle sensor (1) according to one of the previous claims, **characterised in that** the counting signal triggers the evaluation unit.

6. Steering angle sensor (1) according to one of the previous claims, **characterised in that** the counting signal is fed to an up-and-down counter present in the evaluation unit and that a microprocessor is present which initialises and reads the up-and-down counter.

## Revendications

1. Capteur d'angle de direction (1) pour véhicule automobile ayant un disque de code (2) monté de façon rotative dont l'angle de rotation correspond à l'angle de rotation du volant, ayant au moins un détecteur (13) dont l'entrée est amenée à la dimension modulée avec le disque de code (2) et dont la sortie est amenée à l'entrée d'une unité d'analyse qui détermine la valeur absolue de l'angle de direction, et ayant un dispositif de comptage (14) correspondant au disque de code (2) dont des signaux de comptage amenés à l'unité d'analyse dépendent du nombre de révolutions complètes effectuées par le disque de code (2) par rapport à une position centrale, **caractérisé en ce que** le dispositif de comptage (14) présente deux capteurs de champ magnétique (17) agencés l'un à côté de l'autre dans une position fixe et **en ce qu'**au moins un élément magnétique (18) est prévu sur le disque de code (2), les capteurs de champ magnétique (17) correspondant sans contact avec l'élément magnétique (18) et adressant un signal de comptage à l'unité d'analyse lors de l'entrée et/ou de la sortie de l'élément magnétique (18) à l'intérieur et/ou à l'extérieur la zone de détection du capteur de champ magnétique (17) respectif aux fins de la détermination de la direction de rotation du disque de code.

2. Capteur d'angle de direction (1) selon la revendication 1, **caractérisé en ce que** l'élément magnétique (18) au moins au nombre d'un est agencé sur la périphérie du disque de code (2).

3. Capteur d'angle de direction (1) selon l'une quelconque des revendications 1 ou 2, **caractérisé en ce que** l'élément magnétique (18) au moins au nombre d'un est un aimant permanent.

4. Capteur d'angle de direction (1) selon l'une quelconque des revendications 1 à 3, **caractérisé en ce que** les capteurs de champ magnétique (17) sont des contacts à lames souples.

5. Capteur d'angle de direction (1) selon l'une quelconque des revendications précédentes, **caractérisé en ce que** le signal de comptage déclenche l'unité d'analyse.

6. Capteur d'angle de direction (1) selon l'une quelconque des revendications précédentes, **caractérisé en ce que** le signal de comptage est adressé à un compteur-décompteur présent dans l'unité d'analyse et **en ce qu'**il est prévu un microprocesseur qui initialise et lit le compteur-décompteur.
